# EUROPÄISCHE PATENTSCHRIFT

(11) **EP 2 850 292 B1**
(45) Veröffentlichungstag und Bekanntmachung des Hinweises auf die Patenterteilung: **20.04.2016**
(21) Anmeldenummer: 13722770.8
(22) Anmeldetag: 16.05.2013
(51) Int. Cl.: F16H 35/00, F16H 53/04, F01L 1/344

(54) **NOCKENWELLENEINHEIT**
CAMSHAFT UNIT
UNITÉ D'ARBRES À CAMES

(30) Priorität: 18.05.2012 DE 102012010133
(43) Veröffentlichungstag der Anmeldung: 25.03.2015
(73) Patentinhaber: Schaeffler Technologies AG & Co. KG, 91074 Herzogenaurach (DE)
(72) Erfinder: SCHÄFER, Jens, 91074 Herzogenaurach (DE); ZWAHR, Sebastian, 90587 Obermichelbach (DE)
(86) Internationale Anmeldenummer: PCT/EP2013/060189
(87) Internationale Veröffentlichungsnummer: WO 2013/171322

(56) Entgegenhaltungen:
- WO-A1-95/00748
- DE-A1- 4 230 074
- DE-A1- 4 402 907
- DE-A1-102008 033 230
- GB-A- 2 327 737
- GB-A- 2 369 175
- GB-A- 2 432 645
- US-A1- 2002 038 639
- US-A1- 2005 226 736
- US-A1- 2009 314 235
- US-B1- 6 216 654

## Beschreibung

### Gebeit der Erfindung

Die Erfindung betrifft eine Nockenwelleneinheit mit zwei konzentrisch zueinander angeordneten Nockenwellen und einem Nockenwellenversteller.

### Hintergrund der Erfindung

Nockenwelleneinheiten mit konzentrisch zueinander angeordneten Nockenwellen, auch als Doppelnockenwellen bezeichnet, weisen eine erste Nockenwelle auf, die sich als innere Nockenwelle sich zumindest teilweise in eine zweite Nockenwelle als äußerer Nockenwelle erstreckt. Gattungsgemäße Nockenwelleneinheiten zur Betätigung von Gaswechselventilen eines Verbrennungsmotors sind beispielsweise aus EP 0 582 846 B1 oder US 6,725,817 bekannt. Die Nockenwelleneinheiten weisen jeweils für jede Nockenwelle einen Nockenwellenversteller auf, der eine Phasenverschiebung zur Kurbelwelle ermöglicht. Die Nockenwellenversteller dieser Nockenwelleneinheiten sind jeweils hydraulisch betätigt. Derartige Hydraulikantriebe arbeiten zum einen relativ reaktionsträge und weisen aufgrund der öltemperaturabhängigen Viskosität temperaturabhängige Stellwerte auf. Darüber hinaus sind größere Verstellwinkel schwierig und bei den vorstehenden genannten speziellen Antriebsausführungen nicht erreichbar.

EP 1 803 904 A2 zeigt eine weitere Nockenwelleneinheit mit zwei Nockenwellenverstellern. Die Nockenwelleneinheit baut ausladend und erfordert ein aufwändiges Abstimmen der beiden Nockenwellenversteller. Die Nockenwellenversteller können auch an den jeweils entgegen gesetzten Enden der Nockenwellen im Zylinderkopf angeordnet sein. Der Bauraumbedarf wächst dadurch weiter, und es steht kein freies Nockenwellenende zur Verfügung, das beispielsweise zur Anbindung einer Kraftstoffpumpe genutzt werden könnte. Aufgrund der Vielzahl der zu montierenden Teile ist diese Anordnung auch aufwändig in der Herstellung. Eine gattungsgemäße Nockenwelleneinheit geht aus WO 95/00748 A1 hervor.

### Aufgabe der Erfindung

Aufgabe der Erfindung ist es, eine einen geringen Bauraum erfordernde Nockenwelleneinheit zu schaffen, die unaufwändig gestaltet ist.

Die Aufgabe wird gelöst durch eine Nockenwelleneinheit aufweisend eine erste Nockenwelle, eine zweite Nockenwelle, die konzentrisch zur ersten Nockenwelle angeordnet ist, und einen Nockenwellenversteller, mit dem beide Nockenwellen zur Kurbelwelle phasenverstellbar sind.

Die erfindungsgemäße Nockenwelleneinheit ermöglicht ein Verstellen beider Nockenwellen durch nur einen Nockenwellenversteller. Auf einen zweiten Nockenwellenversteller mit einem weiteren Antrieb kann daher verzichtet werden. Dadurch lässt sich die Nockenwelleneinheit nicht nur günstiger herstellen; auch ein Verschachteln der Nockenwellenversteller entfällt, und das freie, dem Nockenwellenversteller abgewandte Ende der Nockenwelle kann zur Anbindung anderer Nebenaggregate wie beispielsweise einer Kraftstoffpumpe genutzt werden.

Damit die beiden Nockenwellen durch den gleichen Nockenwellenversteller sowohl relativ zueinander als auch relativ zur Kurbelwelle verstellt werden können, ist eine Zwangskopplung vorgesehen. Die beiden Nockenwellen sind damit nicht unabhängig voneinander verstellbar, sondern ihr Winkelversatz ist durch die Stellung des Zwangskoppelelements stets vorgegeben. Somit kann bei bekannter Phasenlage einer Nockenwelle auf die Phasenlage der anderen, zwangsgekoppelten Nockenwelle geschlossen werden.

Zur Bestimmung der Drehwinkellagen der Nockenwellen ist daher nur eine Sensoreinheit erforderlich. Dabei ist es unerheblich, ob die Sensoreinheit direkt an einer der Nockenwellen, am Zwangskoppelelement oder einem anderen Teil des Nockenwellenverstellers, das phasenfest zum Zwangskoppelelement ist, angeordnet ist. Damit ist bereits eine Sensoreinheit ausreichend, um die Position beider Nockenwellen zu ermitteln.

Das Zwangskoppelelement verbindet die beiden Nockenwellen auf mechanische Weise. Es ist direkt oder indirekt durch den Nockenwellenversteller beaufschlagbar und als ein Verbindungsglied ausgebildet. Beim Verstellen des Nockenwellenverstellers führt das Zwangskoppelelement eine Bewegung aus, die eine Zwangsverdrehung der Nockenwellen untereinander bewirkt. Zusätzlich kann das Verbindungsglied auch durch einen vom Nockenwellenversteller separierten, zusätzlichen Aktuator beaufschlagt, verriegelt oder überlagert werden.

Die Zwangskopplung des als Verbindungsglieds mit den Nockenwellen ausgebildeten Zwangskoppelelements erfolgt über Verzahnungen. Die Verzahnungen können beispielsweise als Gerad-, Schräg-, Kugel- oder Gleitverzahnungen ausgebildet und endseitig an den Nockenwellen angeordnet sein. Das Verbindungsglied weist mehrere Verzahnungen auf, die gleichzeitig mit Gegenverzahnungen an den Nockenwellen in Eingriff stehen. Verharrt das Verbindungsglied an seiner axialen Position, sind aufgrund des Zahneingriffs auch die Drehwinkellagen beider Nockenwellen zum Verbindungsglied und damit zum Nockenwellenversteller festgelegt. Wird hingegen das Verbindungsglied axial verschoben, bewirken die kämmende Schrägverzahnungen bei axial fixierten Nockenwelle eine Relativverdrehung der Nockenwelle zum Verbindungsglied. In einer Ausführungsform sind die Schrägverzahnungen gleichsinnig orientiert. Ein Verschieben des Verbindungsglieds führt somit zu einer Verstellung der Nockenwellen mit dem gleichen Drehsinn. Die Schrägungswinkel der beiden Verzahnungen sind vorzugsweise unterschiedlich, um auch eine Relativverdrehung der Nockenwellen untereinander vorzunehmen.

In einer anderen Ausführungsform weisen die Schrägungswinkel ein unterschiedliches Vorzeichen auf und sind damit als Gegenschrägverzahnungen ausgeführt. Ein axiales Verschieben des Verbindungsglieds führt aufgrund der gegensinnig gerichteten Verzahnungen zu einer Verstellung der ersten Nockenwelle in Richtung "früh" und der zweiten Nockenwelle in Richtung "spät" und damit zu einer deutlich größeren Spreizung der Relativdrehwinkellagen der Nockenwellen.

Das Verbindungsglied ist koaxial zu den Nockenwellen angeordnet und zu diesen durch einen Verstellantrieb in Richtung der Nockenwellenhauptachsen axial verschiebbar. Um mittels einer vertretbaren Antriebsleistung eine hinreichend große Nockenwellenverstellung zu bewirken, weist der Verstellantrieb zwischen dem Aktuator des Nockenwellenverstellers und dem Verbindungsglied bevorzugt ein übersetzendes Getriebe auf. Wird durch den Aktuator zunächst eine Drehbewegung eingebracht, ist zudem eine Übersetzung in eine Axialbewegung des Verbindungsglieds erforderlich.

Die hohe Übersetzung kann über einen Spindelantrieb erreicht werden, der eine lineare Verschiebung des Verbindungsglieds und damit aufgrund der Schrägverzahnungen ein Zwangsverdrehen der in Eingriff stehenden Nockenwellen zur Folge hat. Der Spindelantrieb weist vorzugsweise als ein Kugelgewindetrieb eine Spindel und eine Gewindemutter auf. Über die helixförmige Führungsbahn der Spindel wird ein Axialvorschub bewirkt, der wegen der Schrägverzahnungen der Nockenwellen und des Verbindungsglieds zu einer Relativverdrehung der Nockenwellen zum Antriebsrad führt. Über den Verstellmotor kann der Antrieb der Nockenwellen daher verstärkt oder verzögert werden. Die Spindel kann mit der Abtriebswelle eines Elektromotors verbunden oder durch diese selbst gebildet sein. Die Gewindemutter kann mit dem Verbindungsglied fest verbunden sein, oder das Verbindungsglied selbst kann zur Spindel gerichtet eine Mantelfläche mit einer entsprechenden Oberflächenkontur aufweisen und ist damit einteilig mit der Gewindemutter ausgebildet. Alternativ ist eine Gewindemutter am Verbindungsglied axial durch ein Sicherungsmittel gehalten.

Bevorzugt ist das Verbindungsglied als eine Hülse ausgebildet, wobei die Nockenwellen an axial zueinander versetzten Flächen an die Hülse angebunden sind. Die Hülse kann axial durch den vorstehend beschriebenen Spindelantrieb oder durch einen anderen Antrieb verschoben werden. Die Momentenübertragung von dem Verbindungsglied auf die Nockenwellen kann sowohl an der Außenmantelfläche als auch an der Innenmantelfläche des Verbindungsglieds erfolgen.

In einer ersten Ausgestaltung des hülsenförmigen Verbindungsglieds erfolgt die Anbindung beider Nockenwellen über die Innenmantelfläche der Hülse. Diese Ausgestaltung ist beispielsweise vorteilhaft, wenn beide Nockenwellen als Hohlwellen ausgebildet sind und die innere Nockenwelle an einem Zentralschaft gelagert werden kann. Damit das Verschiebeglied mit beiden Nockenwellen kämmen kann, weist es einen Radialabsatz auf, dessen Breite dem Durchmesser der inneren Nockenwelle entspricht. Dadurch ergibt sich eine gestufte Hülse, die an ihren unterschiedlichen Durchmessern mit den unterschiedlichen Nockenwellen kämmen kann. Innenseitig kann die gestufte Hülse im Bereich ihres größeren Durchmessers eine Gewindemutter zur Anbindung an eine Spindel aufweisen. Die Nockenwelleneinheit baut damit kompakt.

In einer zweiten Ausgestaltung erfolgt die Anbindung beider Nockenwellen über die Außenmantelfläche. Bei dieser Ausgestaltung kann das Verbindungsglied dünnwandig realisiert sein und eine konstante Wandstärke aufweisen. Das Verbindungsglied ist dadurch massearm. Weiterhin lassen sich die Verzahnungen in die Außenmantelfläche auf einfachere Weise einbringen als in die Innenmantelfläche, so dass die Herstellung des Verschiebeglieds vereinfacht wird.

In einer dritten Ausgestaltung weist das Verschiebeglied stirnseitig eine Ringnut auf. Die Ringnutwände weisen Verzahnungen auf, die mit Gegenverzahnungen an den Nockenwellen kämmen können. Dazu erstrecken sich beide Nockenwellen in die Ringnut, und die Gegenverzahnung der äußeren Nockenwelle kämmt mit der äußeren Ringnutverzahnung, während die Gegenverzahnung der inneren Nockenwelle mit der inneren Ringnutverzahnung kämmt. Bei dieser Variante ist kein axialer Versatz der Verzahnungen für die beiden Nockenwellen am Verschiebeglied erforderlich, so dass die gesamte Nockenwelleneinheit axial kürzer bauen kann.

In einer vierten Ausgestaltung weist das als zylindrische Hülse ausgebildete Verschiebeglied sowohl innenseitig als auch an seiner Außenmantelfläche eine Verzahnung auf. Die beiden Verzahnungen kämmen jeweils mit einer Gegenverzahnung an unterschiedlichen Nockenwellen, die zu diesem Zweck das Hülsenende sowohl radial innenseitig als auch radial außenseitig umschließen. Zur Aufnahme der Hülse sind beide Nockenwellen im Radius endseitig etwas reduziert. Ein Verschiebeglied in dieser Variante kann besonders dünnwandig ausgebildet sein und ggf. als ein Blechbauteil hergestellt werden.

In den vier Ausgestaltungen kann jeweils die innere Nockenwelle an einem Zentralschaft gelagert sein. Bevorzugt erfolgt die Lagerung über ein Wälzlager. Insbesondere wenn die mechanische Kopplung des Verschiebeglieds an die Nockenwellen über Schrägverzahnungen erfolgt, kann das Lager als ein Axiallager ausgebildet sein. Der Zentralschaft kann in seiner axialen Verlängerung Gewindegänge aufweisen und damit eine Spindel eines Verstellantriebs bilden, der mit einem Elektromotor betreibbar ist.

Die Nockenwellen sind als Ventilnockenwellen Teil eines Ventiltriebs. Sie verfügen über mehrere Einlass- bzw. Auslassnocken, welche mit zugeordneten Ladungswechselventilen in Wirkverbindung stehen. Die Nockenwellen rotieren in einem Zylinderkopf einer Brennkraftmaschine. Bevorzugt über eine Antriebsscheibe wie einem Kettenrad stehen die Nockenwellen bzw. der Nockenwellenversteller mit der Kurbelwelle in Verbindung. Bei laufender Brennkraftmaschine werden die Nockenwellen dann von der Kurbelwelle über die Antriebsscheibe angetrieben und betätigen die Ladungswechselventile. Mit der Antriebsscheibe ist bevorzugt auch der Nockenwellenversteller verbunden, der über einen Verstellmotor beispielsweise elektrisch antreibbar ist.

Der Nockenwellenversteller wirkt bevorzugt auf beide Nockenwellen ein. In einer Ausgestaltung kann vorgesehen sein, dass das Verbindungsglied nur mit einer der Nockenwellen verzahnt ist und diese direkt verstellt. Die andere Nockenwelle ist dann mit dem Verbindungsglied unverbunden und kann phasenfest zur ersten Nockenwelle sein oder mit dieser über einen eigenen Verstellmechanismus gekoppelt sein, so dass eine indirekte Verstellung der zweiten Nockenwelle erfolgt.

Die Nockenwellen können auch anstatt indirekt mit dem Verbindungsglied verbunden sein. Dann ist dieses nicht unmittelbar mit der Nockenwelle verbunden, sondern wirkt beispielsweise über eine Zwischenwelle auf zumindest eine der Nockenwellen ein.

### Kurze Beschreibung der Zeichnungen

Im folgenden wird die Erfindung anhand von zeichnerisch dargestellten Ausführungsbeispielen näher erläutert. Es zeigen:
- Figur 1: eine erste Nockenwelleneinheit im Längsschnitt mit einem Verschiebeglied, das zwei innere Verzahnungen aufweist,
- Figur 2: eine zweite Nockenwelleneinheit im Längsschnitt mit einem Verschiebeglied, das zwei äußere Verzahnungen aufweist,
- Figur 3: eine dritte Nockenwelleneinheit im Längsschnitt mit einem Verschiebeglied, das eine stirnseitige Ringnut aufweist,
- Figur 4: eine vierte Nockenwelleneinheit im Längsschnitt mit einem Verschiebeglied, das eine innere und eine äußere Verzahnung aufweist.

### Ausführliche Beschreibung der Zeichnungen

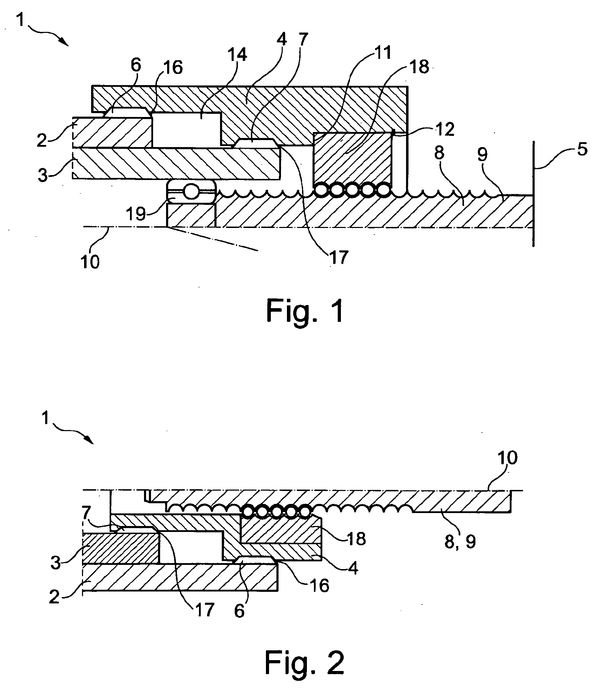

Figur 1 zeigt eine erste Nockenwelleneinheit 1 mit einer ersten Nockenwelle 2, einer konzentrisch zur ersten Nockenwelle 2 angeordneten zweiten Nockenwelle 3 und einem Verbindungsglied 4. Das Verbindungsglied 4 steht mit der ersten Nockenwelle 2 über eine erste Verzahnung 16 und mit der zweiten Nockenwelle über eine zweite Verzahnung 17 in Verbindung. Dazu ist das Verbindungsglied 4 als eine gestufte Hülse ausgebildet, die zwei verschiedene Innenradien aufweist und beide Nockenwellen 2, 3 radial außen umgreift. Die Innenradiusdifferenz entspricht dem Ringdurchmesser der äußeren Nockenwelle, die vorliegend durch die erste Nockenwelle 2 gebildet ist. In den Innenhohlraum 14 des Verbindungsglieds 4 erstrecken sich die beiden Nockenwellen 2, 3 axial unterschiedlich weit. Die Verzahnungen 16, 17 des Verbindungsglieds 4 kämmen mit Gegenverzahnungen 6, 7 der Nockenwellen 2, 3. Alle drei Baueile, die beiden Nockenwellen 2, 3 und das Verbindungsglied 4, sind um die gemeinsame Rotationsachse 10 drehbar.

Das Verbindungsglied 4 ist axial beweglich. Der Axialvorschub wird durch einen nur schematisch dargestellten Nockenwellenversteller 5 eingeleitet, der einen über einen Elektromotor betreibbaren Verstellantrieb 9 aufweist. Der Verstellantrieb 9 ist durch einen Wellenschaft in Form einer Spindel 8 gebildet, auf der eine Gewindemutter 18 angeordnet ist. Mit der Gewindemutter 18 bildet die Spindel 8 einen Kugelgewindetrieb. Vorliegend ist die Gewindemutter 18 separat vom Verbindungsglied 4 hergestellt und fest mit dem Verbindungsglied 4 verbunden. Sie schlägt einerseits an einem Radialabsatz 11 des Verbindungsglieds 4 an und ist an ihrem anderen Axialende durch einen Sicherungsring 12 gehalten.

Der Wellenschaft weist an seinem Wellenende ein Kugellager 19 auf, über das die innere Nockenwelle gelagert ist.

Die Verzahnungen 16, 17 und ihre Gegenverzahnungen 6, 7 sind als Schrägverzahnungen ausgeführt. Ein Verdrehen der Spindel 8 bewirkt zunächst einen Axialvorschub des mit der Gewindemutter 18 verbundenen Verbindungsglieds 4. Das durch die Verzahnungen 16, 17 auf die Nockenwellen 2, 3 eingebrachte Moment führt aufgrund ihrer axial festen Positionierung zu ihrem Verdrehen.

Figur 2 zeigt eine Ausgestaltung einer Nockenwelleneinheit 1, die sich von der gemäß Figur 1 im Wesentlichen dadurch unterscheidet, dass das Verbindungsglied 4 als eine Hülse ausgebildet ist, deren Wandstärke in etwa konstant ist. Weiterhin sind die Nockenwellen 2, 3 nicht an dem Innenumfang der Hülse mit dieser verzahnt, sondern am Außenmantel 13. Das hülsenartige Verbindungsglied 4 kann dadurch eine im Wesentlichen gleiche Wandstärke aufweisen und leichter ausfallen. Auch dieses Verbindungsglied 4 weist einen Radialabsatz 11 auf, an dem die Gewindemutter 18 anschlägt Mit dem Radialabsatz 11 wird gleichzeitig der Durchmesser der Hülse auf den Innenumfang der äußeren Nockenwelle 3 geweitet. Diese Hülse weist daher nur zwei Stufen auf, während die Hülse nach Figur 1 drei verschiedene Innendurchmesserbereiche (für die beiden Nockenwellen 2,3 und die Gewindemutter 18) besitzt.

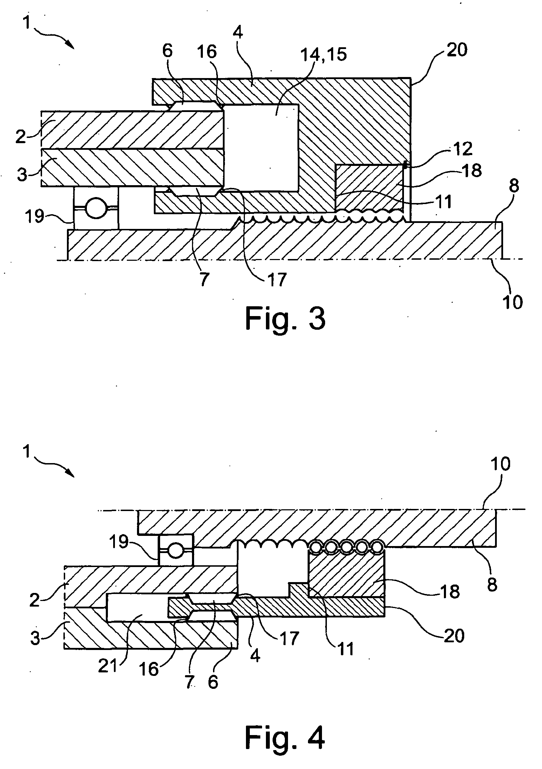

Figur 3 zeigt eine Ausgestaltung einer Nockenwelleneinheit 1, die sich von der gemäß Figur 1 im Wesentlichen dadurch unterscheidet, dass das Verbindungsglied 4 als eine Hülse mit einer axial stirnseitig eingebrachten Ringnut 15 ausgebildet ist. Die Ringnut 15 verläuft konzentrisch zur Rotationsachse 10 und weist einen Nutgrund auf, der von einer Außenwand mit der ersten Verzahnung 16 und einer Innenwand mit der zweiten Verzahnung 17 begrenzt ist. Beide Verzahnungen 6, 7 sind wiederum als Schrägverzahnungen ausgeführt. Dadurch dass die beiden Nockenwellen 2, 3 an unterschiedlichen Wänden kämmen, ist ein axialer Versatz der Nockenwelle nicht erforderlich. Die Ringnut 15 kann somit relativ flach ausfallen, so dass der hier noch vorhandene Innenhohlraum 14 auch gänzlich entfallen könnte.

An dem der Ringnut 15 abwandten stirnseitigen Ende 20 des Verbindungsglieds 4 ist radial innenseitig eine Ausnehmung für die Gewindemutter 18 vorgesehen.

Figur 4 zeigt eine Ausgestaltung einer Nockenwelleneinheit 1, die sich von der gemäß Figur 1 dadurch unterscheidet, dass das Verbindungsglied 4 als eine Hülse mit im Wesentlichen konstanten Durchmesser ausgebildet ist. Eine derartige Hülse lässt sich kostengünstig herstellen. Wie bei der Ausführungsform nach Figur 3 greifen die Gegenverzahnungen 6, 7 der Nockenwellen 2, 3 von unterschiedlichen Radialrichtungen in die Verzahnungen 16, 17 des Verbindungselements 4 ein. Dazu weisen die eigentlich radial aneinander liegenden Nockenwellen 2, 3 jeweils endseitig eine ringförmige Aussparung auf, die zusammen einen Ringspalt 21 bilden. An den Wänden der ringförmigen Aussparung sind die Gegenverzahnungen 6, 7 angeordnet. In den Ringspalt 21 erstreckt sich das Verbindungsglied 4 mit seinen Verzahnungen 16, 17. An seinem dem Ringspalt 21 abgewandten Ende 20 ist das Verbindungsglied 4 über die Gewindemutter 18 mit der Spindel 8 verbunden.

### Liste der Bezugszahlen

- 1: Nockenwelleneinheit
- 2: erste Nockenwelle
- 3: zweite Nockenwelle
- 4: Verbindungsglied
- 5: Nockenwellenversteller
- 6: erste Gegenverzahnung
- 7: zweite Gegenverzahnung
- 8: Spindel
- 9: Verstellantrieb
- 10: Rotationsachse
- 11: Radialabsatz
- 12: Sicherungsring
- 13: Außenmantel
- 14: Innenhohlraum
- 15: Ringnut
- 16: erste Verzahnung
- 17: zweite Verzahnung
- 18: Gewindemutter
- 19: Kugellager
- 20: stirnseitiges Ende
- 21: Ringspalt

## Patentansprüche

1. Nockenwelleneinheit (1), aufweisend:
- eine erste Nockenwelle (2),
- eine zweite Nockenwelle (3), die konzentrisch zur ersten Nockenwelle (2) angeordnet ist,
- einen Nockenwellenversteller (5), mit dem beide Nockenwellen (2, 3) zur Kurbelwelle phasenverstellbar sind,
**dadurch gekennzeichnet, dass**
- der Nockenwellenversteller (5) ein in Axialrichtung der Nockenwellen (2, 3) verschiebliches Verbindungsglied (4) mit zwei Verzahnungen (16, 17) aufweist,
- wobei die erste Verzahnung (16) mit einer Gegenverzahnung (6) an der ersten Nockenwelle (2) und die zweite Verzahnung (17) mit einer zweiten Gegenverzahnung (7) an der zweiten Nockenwelle (3) kämmt.

2. Nockenwelleneinheit nach Anspruch 1, **dadurch gekennzeichnet, dass** die Nockenwellen (2, 3) mit dem Nockenwellenversteller (5) derart gekoppelt sind, dass ein Verstellen des Nockenwellenverstellers (5) ein gegenphasiges Verstellen der Nockenwellen (2, 3) bewirkt.

3. Nockenwelleneinheit nach Anspruch 1 oder 2, **dadurch gekennzeichnet, dass** die Nockenwelleneinheit (1) einen Verstellantrieb (9) mit einem Kugelgewindetrieb aufweist, der über eine Spindel (8) eine am Verbindungsglied (4) befestigte oder einteilig mit dem Verbindungsglied (4) ausgebildete Gewindemutter (18) antreibt.

4. Nockenwelleneinheit nach Anspruch 3, **dadurch gekennzeichnet, dass** das Verbindungsglied (4) als eine Hülse ausgebildet ist, wobei die Gewindemutter (18) im Hülseninneren angeordnet und axial gesichert ist.

5. Nockenwelleneinheit nach Anspruch 3 oder 4. **dadurch gekennzeichnet, dass** eine der Nockenwellen (2, 3) an der Spindel (8) kugelgelagert ist.

6. Nockenwelleneinheit nach einem der Ansprüche 1 bis 5, **dadurch gekennzeichnet, dass** das Verschiebeglied (4) als eine Hülse mit einem Radialabsatz (11) ausgebildet ist und die beiden Verzahnungen (16, 17) an Hülsenwandabschnitten unterschiedlichen Durchmessers ausgebildet sind.

7. Nockenwelleneinheit nach Anspruch 6, **dadurch gekennzeichnet, dass** die Hülse eine stirnseitige Ringnut (15) aufweist, deren Außenwand die erste Verzahnung (16) und deren Innenwand die zweite Verzahnung (17) aufweist.

8. Nockenwelleneinheit nach einem der Ansprüche 1 bis 5, **dadurch gekennzeichnet, dass** das Verschiebeglied (4) als eine Hülse ausgebildet ist, auf deren Außenmantel (13) die erste Verzahnung (16) und auf deren Innenmantel die zweite Verzahnung (17) ausgebildet sind.

9. Nockenwelleneinheit nach einem der vorhergehenden Ansprüche, **dadurch gekennzeichnet, dass** beide Verzahnungen (16, 17) als Schrägverzahnungen mit unterschiedlichen Eingriffswinkeln ausgebildet sind.

## Claims

1. Camshaft unit (1), having:
- a first camshaft (2),
- a second camshaft (3) which is arranged concentrically with respect to the first camshaft (2),
- a camshaft adjuster (5), by way of which the phase of both camshafts (2, 3) with respect to the crankshaft can be adjusted,
**characterized in that**
- the camshaft adjuster (5) has a connecting member (4) which can be displaced in the axial direction of the camshafts (2, 3) and has two toothing systems (16, 17),
- the first toothing system (16) meshing with a corresponding toothing system (6) on the first camshaft (2), and the second toothing system (17) meshing with a second corresponding toothing system (7) on the second camshaft (3).

2. Camshaft unit according to Claim 1, **characterized in that** the camshafts (2, 3) are coupled to the camshaft adjuster (5) in such a way that an adjustment of the camshaft adjuster (5) brings about an adjustment of opposite phase of the camshafts (2, 3).

3. Camshaft unit according to Claim 1 or 2, **characterized in that** the camshaft unit (1) has an adjusting drive (9) with a ball screw drive which, via a spindle (8), drives a threaded nut (18) which is fastened to the connecting member (4) or is configured in one piece with the connecting member (4).

4. Camshaft unit according to Claim 3, **characterized in that** the connecting member (4) is configured as a sleeve, the threaded nut (18) being arranged in the sleeve anterior and being secured axially.

5. Camshaft unit according to Claim 3 or 4, **characterized in that** one of the camshafts (2, 3) is mounted on ball bearings on the spindle (8).

6. Camshaft unit according to one of Claims 1 to 5, **characterized in that** the displacement member (4) is configured as a sleeve with a radial step (11), and the two toothing systems (16, 17) are configured on sleeve wall sections of different diameter.

7. Camshaft unit according to Claim 6, **characterized in that** the sleeve has an end-side annular groove (15), the outer wall of which has the first toothing system (16) and the inner wall of which has the second toothing system (17).

8. Camshaft unit according to one of Claims 1 to 5, **characterized in that** the displacement member (4) is configured as a sleeve, on the outer shell (13) of which the first toothing system (16) is configured and on the inner shell of which the second toothing system (17) is configured.

9. Camshaft unit according to one of the preceding claims, **characterized in that** both toothing systems (16, 17) are configured as helical toothing systems with different angles of engagement.

## Revendications

1. Unité d'arbres à cames (1), présentant:
- un premier arbre à cames (2),
- un deuxième arbre à cames (3), qui est disposé de façon concentrique au premier arbre à cames (2)
- un variateur d'arbre à cames (5), avec lequel les deux arbres à cames (2, 3) peuvent être décalés en phase par rapport au vilebrequin,
**caractérisée en ce que**
- le variateur d'arbre à cames (5) présente un organe de liaison (4) avec deux dentures (16, 17), mobile en direction axiale des arbres à cames (2, 3),
- dans laquelle la première denture (16) engrène avec une denture opposée (6) sur le premier arbre à cames (2) et la deuxième denture (17) engrène avec une deuxième denture opposée (7) sur le deuxième arbre à cames (3).

2. Unité d'arbres à cames selon la revendication 1, **caractérisée en ce que** les arbres à cames (2, 3) sont couplés au variateur d'arbre à cames (5), de telle manière qu'un déplacement du variateur d'arbre à cames (5) entraîne un déplacement en apposition de phase des arbres à cames (2, 3).

3. Unité d'arbres à cames selon la revendication 1 ou 2, **caractérisée en ce que** l'unité d'arbres à cames (1) présente un entraînement de déplacement (9) avec une vis d'entraînement à billes, qui entraîne au moyen d'une broche (8) un écrou fileté (18) fixé à l'organe de liaison (4) ou réalisé d'une seule pièce avec l'organe de liaison (4).

4. Unité d'arbres à cames selon la revendication 3, **caractérisée en ce que** l'organe de liaison (4) est réalisé sous la forme d'une douille, dans laquelle l'écrou fileté (18) est disposé et fixé axialement à l'intérieur de la douille.

5. unité d'arbres à cames selon la revendication 3 ou 4, **caractérisée en ce qu'**un des arbres à cames (2, 3) est supporté par des billes sur la broche (8).

6. Unité d'arbres à cames selon l'une quelconque des revendications 1 à 5, **caractérisée en ce que** l'organe de déplacement (4) est réalisé sous la forme d'une douille avec un épaulement radial (11) et les deux dentures (16, 17) sont formées sur des parties de paroi de la douille de diamètres différents.

7. Unité d'arbres à cames selon la revendication 6, **caractérisée en ce que** la douille présente une rainure annulaire frontale (15), dont la paroi extérieure présente la première denture (16) et dont la paroi antérieure présente la deuxième denture (17).

8. Unité d'arbres à cames selon l'une quelconque des revendications 1 à 5, **caractérisée en ce que** l'organe de déplacement (4) est réalisé sous la forme d'une douille, dont la surface latérale extérieure (13) porte la première denture (16) et dont la surface latérale intérieure porte la deuxième denture (17).

9. Unité d'arbres à cames selon l'une quelconque des revendications précédentes, **caractérisée en ce que** les deux dentures (16, 17) sont des dentures obliques avec des angles d'attaque différents.
